# EUROPÄISCHE PATENTSCHRIFT

(11) **EP 2 230 164 B1**
(45) Veröffentlichungstag und Bekanntmachung des Hinweises auf die Patenterteilung: **02.05.2012**
(21) Anmeldenummer: 09155797.5
(22) Anmeldetag: 20.03.2009
(51) Int. Cl.: B62K 19/30

(54) **Fahrradrahmen zur Aufnahme einer Batterieeinheit und zugehörige Batterieeinheit**
Bicycle frame for holding a battery unit and accompanying battery unit
Cadre de vélo destiné à la réception d'une unité de batterie et unité de batterie correspondante

(43) Veröffentlichungstag der Anmeldung: 22.09.2010
(73) Patentinhaber: Thömus Veloshop AG, 3145 Niederscherli (CH)
(72) Erfinder: Binggeli, Thomas, 3145 Niederscherli (CH); Isenschmid, Dominic, 3097 Liebefeld (CH); Zbären, Andreas, 3671 Herbligen (CH); Graf, Urs, 3178 Bösingen (CH); Aeschlimann, Marcel, 2514 Ligerz (CH); Rusch, Christoph, 2502 Biel (CH); Cooper, Gary, 2554 Meinisberg (CH)
(74) Vertreter: AMMANN PATENTANWÄLTE AG BERN

(56) Entgegenhaltungen:
- EP-A- 0 686 522
- EP-A- 1 693 290
- EP-A- 1 982 909
- DE-U1-202008 009 933

## Beschreibung

Die vorliegende Erfindung bezieht sich auf einen Fahrradrahmen, der einen Rohrabschnitt mit einem Innenraum zur Aufnahme mindestens einer Batterieeinheit aufweist, die als Energiequelle für einen elektromotorischen Fahrradantrieb geeignet ist, nach dem Oberbegriff von Patentanspruch 1. Weiterhin bezieht sich die Erfindung auf einen Fahrradrahmen mit einer Batterieeinheit zum Einfügen in einen solchen Fahrradrahmen nach Patentanspruch 14.

Elektromotoren werden bei Fahrrädern sowohl als Vollantrieb als auch als Hilfs- oder Hybridantrieb eingesetzt, wobei der Elektromotor im Bedarfsfall entweder als vollständiger Fahrradantrieb oder als Unterstützung des vom Fahrradfahrer betätigten Pedalantriebs agiert. Als Energiequelle für einen solchen Motor werden Batterien, insbesondere wiederaufladbare Akkumulatoren, benötigt, die herkömmlicherweise an einer geeigneten Stelle an dem Fahradrahmen befestigt sind. Dabei ist es üblich, einen Batteriebehälter an dem Fahrradrahmen anzubringen. Jedoch ist ein solcher Batteriebehälter relativ sperrig und verringert nicht nur den am Fahrradrahmen ansonsten vorhandenen Freiraum, insbesondere zur Unterbringung zusätzlicher Ausrüstung wie z.B. Trinkflaschen, Fahrradwerkzeug, etc., sondern beeinträchtigt im Extremfall auch den Fahrkomfort für den Fahrradfahrer. Zudem stellt auch die Fixierung der Batterie in einem solchen Behälter ein Problem dar, da diese ein nicht zu unterschätzendes Eigengewicht aufweist und dennoch den mitunter starken Erschütterungen während des Fahrradfahrens Stand halten muss.

Aus der EP 0 905 014 B1 ist ein motorangetriebenes Klappfahrrad bekannt, in dessen hinterem Rahmenabschnitt eine Batterie für den Elektroantrieb untergebracht ist. Beim Zusammenfalten des vorderen Rahmenabschnitts um den hinteren Rahmenabschnitt wird eine stirnseitige Öffnung des hinteren Rahmenabschnitts freigelegt, durch welche der Batterieraum von aussen zugänglich ist. Eine solche Stirnöffnung ist jedoch nur bei Klappfahrrädern zweckmässig, da die Frontseite eines ungefalteten Fahrrads im Normalfall durch Fahrradbeleuchtung, Bremsstränge, etc. verdeckt ist und nur unzureichend zugänglich ist. Weiterhin ist auch die Fixierungsmöglichkeit der Batterie in dem Rahmeninnenraum durch diese stirnseitige Öffnung limitiert. Denn eine zuverlässige Batteriehalterung, die auch gegen starke Erschütterungen des Rahmens geschützt ist, ist mitunter durch eine Kraftbeaufschlagung der Batterie in Rahmenlängsrichtung gewährleistet. Da die stirnseitigen Rahmenöffnung jedoch ein manuelles Einführen der Batterie entgegen dieser Kraftwirkung erforderlich macht, können in einer solchen Batteriehalterung nur relativ niedrige Halterungskräfte zum Einsatz kommen.

Aus der EP 0 686 522 A2 ist ein Fahrradrahmen nach dem Oberbegriff des Anspruchs 1 bekannt.

Eine Aufgabe der vorliegenden Erfindung besteht daher darin, einen Fahrradrahmen der eingangs genannten Art anzugeben, der unter Vermeidung der vorgenannten Nachteile ein einfaches Einbringen und Entfernen einer Batterieeinheit in den Innenraum des Rahmenrohrs ermöglicht und durch den gleichzeitig für eine zuverlässige und gut geschützte Unterbringung der Batterie gesorgt ist.

Ein solcher Fahrradrahmen ist in Patentanspruch 1 angegeben. Die weiteren Patentansprüche geben bevorzugte Ausführungsformen dieses Fahrradrahmens an sowie einer darin einfügbaren Batterieeinheit.

Erfindungsgemäss wird also vorgeschlagen, dass der Rohrabschnitt des Fahrradrahmens eine im Wesentlichen in seine Erstreckungsrichtung verlaufende Seitenöffnung aufweist, durch welche die Batterieeinheit in den Innenraum des Rohrabschnitts einfügbar ist. Dadurch ist ein einfaches zum Rahmen quergerichtetes Einbringen und Entfernen der Batterie in bzw. aus dem Innenraum ermöglicht. Gleichzeitig erlaubt ein derartiger Einbringmechanismus die Anordnung einer hochstabilien Batteriefixierung über die betreffende Rohrlänge des Innenraums.

Ein besonders komfortables Einbringen und Entfernen der Batterieeinheit kann durch eine Schwenkeinrichtung realisiert werden, die eine Führung der manuellen Bedienung bewirkt und eine genaue Positionierung der Batterie erlaubt. Vorzugsweise ist hierzu an einem Ende des Innenraums eine Schwenkachse angeordnet, an welche die Batterieeinheit koppelbar und nach dem Ankoppeln in Richtung des Innenraums schwenkbar ist. Im Bereich dieser Schwenkachse ist bevorzugt ein elektrischer Kontakt für die Batterieeinheit angeordnet, so dass die Kontaktierung zum elektromotorischen Antrieb bereits beim Ankoppeln an die Schwenkachse hergestellt ist. Weiterhin bevorzugt ist an die Schwenkachse ein Verschlussdeckel für die Seitenöffnung angelenkt. Dies hat den Vorteil, dass einerseits durch den Verschlussdeckel eine Einführrichtung der Batterie für das Ankoppeln an die Schwenkachse vorgegeben werden kann und andererseits ein gleichzeitiges Verschliessen der Seitenöffnung mit dem Einführen der Batterieeinheit im Laufe der dabei durchgeführten Schwenkbewegung bewerkstelligt werden kann.

Zum Erreichen einer sicheren Batteriefixierung wird gemäss einer bevorzugten Ausführung vorgeschlagen, dass in dem Innenraum eine Spanneinrichtung angeordnet ist, durch welche die Batterieeinheit in Erstreckungsrichtung des Rohrabschnitts mit einer Spannkraft beaufschlagbar ist. In weiterhin bevorzugter Ausführung, bei der gemäss den voranstehenden Erläuterungen an einem Ende des Innenraums eine Schwenkachse angeordnet ist, ist die Spanneinrichtung an dem der Schwenkachse gegenüberliegenden Ende des Innenraums angeordnet. Bevorzugt beträgt die durch die Spanneinrichtung erzeugte Spannkraft mindestens 100 N, vorzugsweise 150 N, und kann beispielsweise durch die Anordnung mindestens einer Feder hervorgerufen werden, die bevorzugt bereits während des Einfügvorgangs der Batterieeinheit vorgespannt wird, und/oder durch eine drehbar gelagerte Achse, durch welche die Batterieeinheit beispielsweise erst nach ihrem Einfügen mit der Spannkraft beaufschlagbar ist.

Gemäss einer ersten bevorzugten Ausführungsform der Spanneinrichtung umfasst diese mindestens einen Schwenkarm, der zwischen einer Aussenstellung, in welcher der Schwenkarm in Richtung der Seitenöffnung weist, und einer Innensstellung, in welcher der Schwenkarm näher in Erstreckungsrichtung des Rohrabschnitts gerückt ist, schwenkbar ist, wobei der Schwenkarm während des Einfügens der Batterieeinheit an dieser festlegbar ist. Dabei kann eine Feder zur Erzeugung der Spannkraft an den Schwenkarm gekoppelt sein und beispielsweise teilweise in dessen Innenraum integriert sein.

Gemäss einer zweiten Ausführungsform umfasst die Spanneinrichtung eine Führungsrolle, entlang welcher die Batterieeinheit während des Einfügens in den Innenraum geführt wird. Dabei kann die Führungsrolle an eine Feder zur Erzeugung der Spannkraft gekoppelt sein.

Gemäss einer dritten Ausführungsform umfasst die Spanneinrichtung eine drehbar gelagerte Achse, durch welche, wie voranstehend bereits erläutert, die Batterieeinheit nach dem Einfügen mit der Spannkraft beaufschlagbar ist.

Eine Batterieeinheit zum Einfügen in einen derartigen Fahrradrahmen weist bevorzugt an ihrer Rückseite einen Steckabschnitt auf, der zum Ankoppeln an die voranstehend erläuterte Schwenkachse ausgebildet ist. Stirnseitig ist an einer erfindungsgemässen Batterieeinheit vorzugsweise eine Erhebungs- oder Vertiefungsstruktur zur Festlegung an der voranstehend erläuterten Spanneinrichtung vorgesehen. Dadurch kann beispielsweise ein Einkoppeln an den voranstehend erläuterten Schwenkarm oder ein Einrasten an der voranstehend beschriebenen Führungsrolle gewährleistet sein.

Nachfolgend ist die Erfindung anhand bevorzugter Ausführungsformen unter Bezugnahme auf die Zeichungen näher erläutert, anhand welchen sich weitere Eigenschaften und Vorteile der Erfindung ergeben. Dabei zeigen:
- Fig. 1:: eine Seitenansicht eines herkömmlichen batteriebetriebenen Fahrrads;
- Fig. 2:: eine Seitenansicht eines erfindungsgemässen Fahrradrahmens mit einem Rohrabschnitt zur Aufnahme einer Batterieeinheit;
- Fig. 3:: eine vergrösserte Darstellung des in Fig. 2 gezeigten Rohrabschnitts zur Aufnahme einer Batterieeinheit mit geschlossenem Verschlussdeckel in perspektivischer Ansicht;
- Fig. 4:: den in Fig. 3 gezeigten Rohrabschnitt mit geöffnetem Verschlussdeckel in perspektivischer Ansicht;
- Fig. 5(a)-(h):: jeweils eine Schnittansicht durch den Rohrabschnitt gemäss Figg. 3 und 4, in welchen eine Spanneinrichtung gemäss einer ersten Ausführungsform der Erfindung integriert ist, wobei jeweils einzelne Schritte zum Einfügen einer Batterieeinheit in den Innenraum des Rohrabschnitts dargestellt sind;
- Fig. 6(a)-(c):: jeweils eine Schnittansicht durch einen Rohrabschnitt, in welchen eine Spanneinrichtung gemäss einer zweiten Ausführungsform der Erfindung integriert ist, wobei jeweils einzelne Schritte zum Einfügen einer Batterieeinheit in den Innenraum des Rohrabschnitts dargestellt sind;
- Fig. 7(a)-(d):: jeweils eine Schnittansicht durch einen Rohrabschnitt, in welchen eine Spanneinrichtung gemäss einer dritten Ausführungsform der Erfindung integriert ist, wobei in Fig. 7(b) ein Schnitt gemäss der in Fig. 7(a) gekennzeichneten
- Fig. 8(a),(b):: Schnittebene dargestellt ist und in den Figg. 7(a), 7(c) und 7(d) jeweils einzelne Schritte zum Einfügen einer Batterieeinheit in den Innenraum des Rohrabschnitts in der gleichen Schnittansicht dargestellt sind; jeweils eine Schnittansicht durch einen Rohrabschnitt, in welchen eine Spanneinrichtung gemäss einer vierten Ausführungsform der Erfindung integriert ist, wobei in Fig. 8(a) die Spanneinrichtung im gespannten Zustand und in Fig. 8(b) die Spanneinrichtung im entspannten Zustand dargestellt ist; und
- Fig. 9(a),(b):: eine Draufsicht auf einen Teilabschnitt eines erfindungsgemässen Verschlussdeckels und eine Führungsplatte zur Führung desselben.

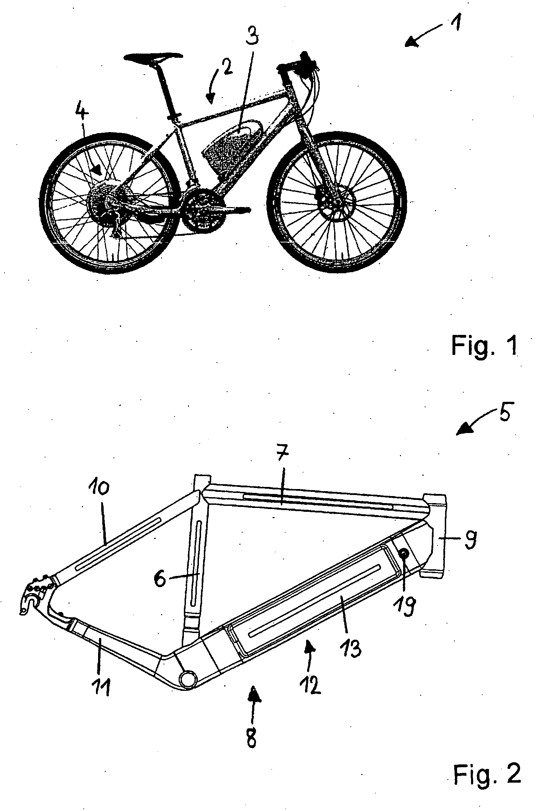

In Fig. 1 ist ein vorbekanntes elektromotorisch angetriebenes Fahrrad 1 mit einem Fahrradrahmen 2 dargestellt, an dessen Unterrohr ein Batteriegehäuse 3 zur Aufnahme einer Batterieeinheit befestigt ist, welche die Energie für einen am Hinterrad angeordneten Elektromotor 4 liefert. Ein solcher bekannter Elektromotor 4 kann sowohl als vollständiger Fahrradantrieb als auch als Hybridantrieb verwendet werden, bei welchem in Abhängigkeit der durch den Pedalantrieb auf das Hinterrad übertragenen Antriebskraft die Muskelkraft des Fahrradfahrers unterstützt wird.

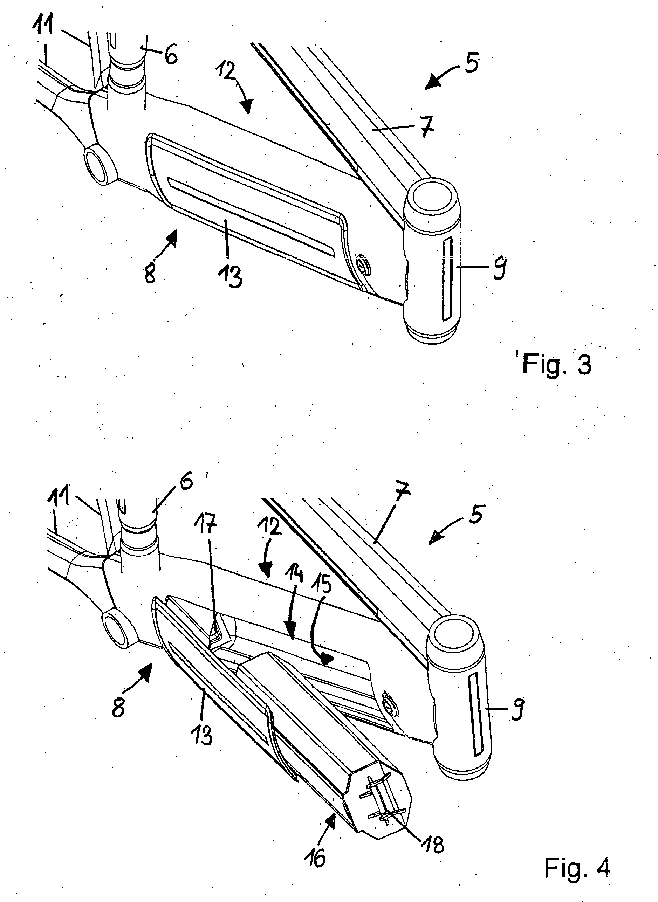

Fig. 2 zeigt einen erfindungsgemässen Fahrradrahmen 5. Der Rahmenaufbau besteht im Wesentlichen aus einem Sattelrohr 6, einem Oberrohr 7 und einem Unterrohr 8, die in einer Dreiecksform angeordnet sind, sowie aus einem frontseitigen Lenkkopfrohr 9 und aus jeweils zwei hinterseitig am Rahmen angeordneten Sattelrohrstreben 10 und Hinterradstreben 11. Das Unterrohr 8 weist im Vergleich zu dem Sattelrohr 6 und dem Oberrohr 7 eine in der Rahmenebene gestreckte Querschnittsform auf, so dass ein vergrösserter Rohrquerschnitt geschaffen ist. Am mittleren Rohrabschnitt 12 des Unterrohrs 8 ist ein Verschlussdeckel 13 für eine Seitenöffnung 14 angeordnet, die in Fig. 4 näher ersichtlich ist.

Fig. 3 zeigt einen Ausschnitt des Fahrradrahmens 5 in vergrösserter Darstellung, in der nochmals das Unterrohr 8 mit geschlossenem Verschlussdeckel 13 dargestellt ist.

Fig. 4 zeigt den gleichen Ausschnitt, wobei der Verschlussdeckel 13 geöffnet ist, wodurch der Innenraum 15 des mittleren Rohrabschnitts 12 durch die Seitenöffnung 14 von aussen zugänglich ist. Die Seitenöffnung 14 erstreckt sich in Längsrichtung des Rohrabschnitts 12 und über einen Grossteil des dahinter liegenden Innenraums 15.

Weiterhin ist in Fig.4 eine Batterieeinheit 16 zum Einfügen in den Innenraum 15 dargestellt. Die Batterieeinheit 16 weist im Wesentlichen eine Zylinderform mit achteckigem Querschnitt auf. Der hinter der Seitenöffnung 14 liegende Bereich des Innenraums 15 ist in seiner Formgebung an die Aussenkontur der Batterieeinheit 16 angepasst. An seinem hinterseitigen Ende ist der Verschlussdeckel 13 mit einer Steckaufnahme 17 fest verbunden, die in den Innenraum 15 hineinragt und in welche die Batterieeinheit 16 an ihrer Rückseite einsteckbar ist. Entlang des Verschlussdeckels 13 ist ein manuelles Heranführen der Batterieeinheit 16 in ihre korrekte Einsteckposition in die Steckaufnahme 17 ermöglicht.

Die Steckaufnahme 17 ist am hinteren Ende des Innenraums 15 schwenkbar festgelegt, wie nachfolgend näher erläutert wird, so dass ein Verschwenken des Verschlussdeckels 13 und der darin eingesteckten Batterieeinheit 16 in Querrichtung zu der Seitenöffnung 14 ermöglicht ist. Am frontseitigen Ende der Batterieeinheit 16 sind mehrere Erhebungsstrukturen 18 angeformt, durch welche die Batterieeinheit 16 zum Eingriff in eine Spanneinrichtung 20 ausgebildet ist, wie ebenfalls anhand der nachfolgenden Figuren näher erläutert wird.

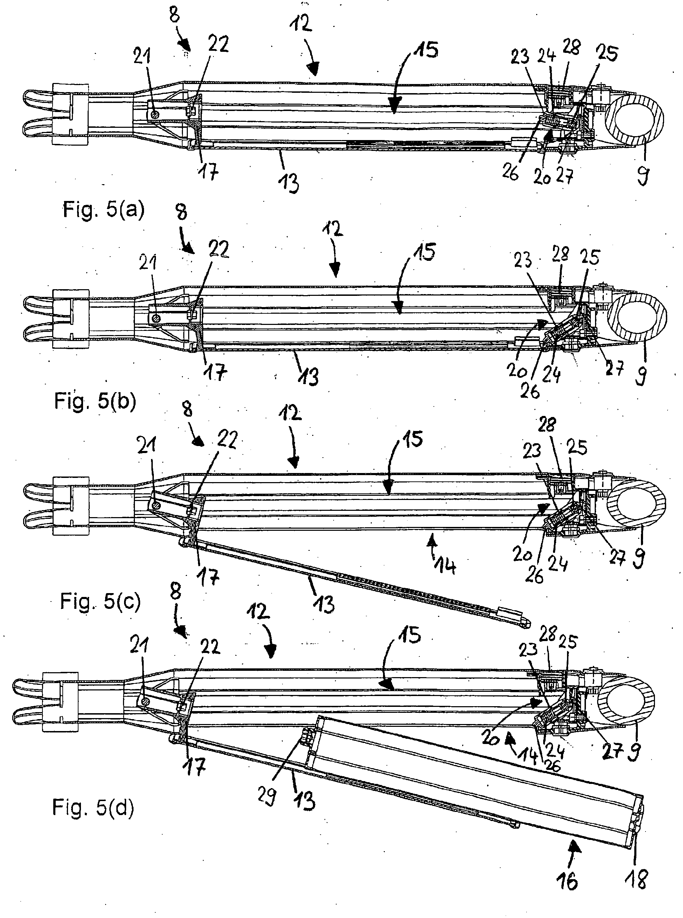

Fig. 5(a) zeigt das Unterrohr 8 in einer Schnittansicht. Darin ist eine am rückseitigen Ende des Innenraums 15 angeordnete Schwenkachse 21 ersichtlich, um welche die Steckaufnahme 17 mit dem daran befestigten Verschlussdeckel 13 angelenkt ist. In der Steckaufnahme 17 ist ferner ein elektrischer Kontakt 22 für die darin einsteckbare Batterieeinheit 16 vorgesehen.

Am frontseitigen Ende des Innenraums 15 befindet sich die Spanneinrichtung 20 zum Einspannen der Batterieeinheit 16 in Richtung des Fahrradrahmens 5. Die Spanneinrichtung 20 umfasst einen Schwenkarm 23 in dessen Innenraum eine Feder 24 zur Erzeugung der Spannkraft angeordnet ist. Der Schwenkarm 23 befindet sich in einer Innenstellung nahe der Unterrohrachse und ist an einer Spannachse 25 derart schwenkbar gelagert, dass er zwischen seiner Innenstellung und einer Aussenstellung, in welcher er zur Seitenöffnung 14 zeigt, schwenkbar ist, wobei diese Schwenkung innerhalb der gleichen Schwenkebene wie diejenige der Steckaufnahme 17 erfolgt. Am äusseren Ende des Schwenkarms 23 ist eine abgerundete Verjüngung 26 ausgeformt, die zum Eingriff in die förmlich entsprechende Erhebungsstruktur 18 an der Batterieeinheit 16 dient, um eine Ankopplung der Batterieeinheit 16 an die Spanneinrichtung 20 während des Einbringvorgangs zu erreichen.

Um die Spannachse 25 ist eine Spiralfeder 27 gespannnt. An der bezüglich der Seitenöffnung 14 entgegengesetzten Aussenwand des Rohrabschnitts 12 ist ein Druckknopf 28 mit einer daran befestigten Rückstellfeder angeordnet, der mit dem Schwenkarm 23 wirkverbunden ist.

Nachfolgend werden anhand der Figg. 5(b)-5(h) die aufeinanderfolgenden Schritte zum Einbringen der Batterieeinheit 16 in den Innenraum 15 im Detail erläutert.

Fig. 5(b) zeigt das Unterrohr 8 nach Betätigung des Druckknopfs 28. Dadurch wird die Spiralfeder 27 ausgelöst, wodurch eine Drehung der Spannachse 25 und daraus resultierende Schwenkbewegung des Schwenkarms 23 von seiner Innenstellung in die Aussenstellung erfolgt. Dadurch wird gleichzeitig eine Entriegelung des Verriegelungsmechanismus des Verschlussdeckels 13 bewirkt, so dass dieser manuell aufklappbar ist.

Fig. 5(c) zeigt das Unterrohr 8 nach dem Aufklappen des Verschlussdeckels 13 um die Schwenkachse 21.

Fig. 5(d) zeigt die Batterieeinheit 16, die entlang der Innenseite des geöffneten Verschlussdeckels 13 an die Steckaufnahme 17 herangeführt wird. Dabei ist insbesondere der rückseitige Steckabschnitt 29 der Batterieeinheit 16 zum Einfügen in die Steckaufnahme 17 erkennbar, der als elektrischer Kontakt ausgebildet ist.

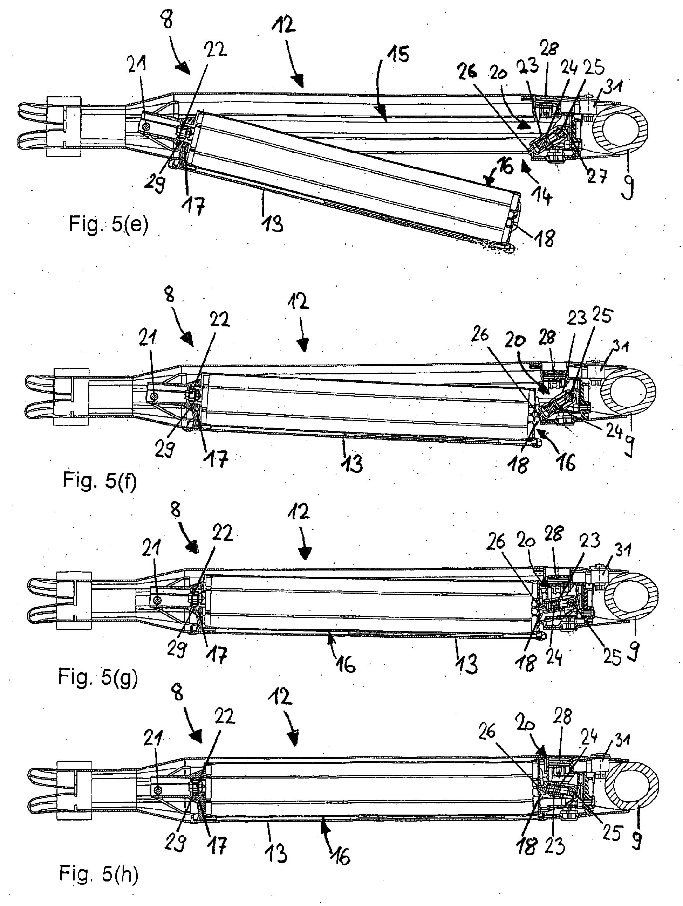

Fig. 5(e) zeigt die Batterieeinheit 16 nach dem Einstecken des Steckabschnitts 29 in die Steckaufnahme 17, wodurch an dieser Seite bereits eine elektrische Kontaktierung der Batterie erfolgt ist.

Fig. 5(f) zeigt die Batterieeinheit 16 nach dem Zurückschwenken des Verschlussdeckels 13, wodurch die Batterieeinheit 16 entlang ihrer Längsseite an die Seitenöffnung 14 herangeführt wird, bis sie mit ihrer stirnseitigen Erhebungsstruktur 18 an den Schwenkarm 23 in dessen Aussenstellung anstösst und mit seiner endseitigen Verjüngung 26 in Eingriff gerät.

Fig. 5(g) zeigt die Batterieeinheit 16 nach weiterem Zurückschwenken des Verschlussdeckels 13, wobei der an der Batterieeinheit eingerastete Schwenkarm 23 mitgeführt wird. Derart wird eine zunehmende Spannung der Feder 24 und eine damit einhergehende Kraftbeaufschlagung der Batterieeinheit 16 bewirkt.

Fig. 5(h) zeigt die Batterieeinheit 16 nach dem vollständigen Einführen in den Innenraum 15 und verriegeltem Verschlussdeckel 13. Der Schwenkarm 23 ist nun vollständig in seine Innenstellung zurückgeführt, wodurch eine maximale Federspannung und Kraftbeaufschlagung der Batterieeinheit 16 erreicht ist. Durch eine derartige Spanneinrichtung 20 kann eine hohe Spannkraft auf die Batterieeinheit 16 übertragen werden, durch die eine gute horizontale Stabilität erzielt wird.

Für ein erneutes Entfernen der Batterieeinheit 16 aus dem Innenraum 15 ist der Druckknopf 28 zu betätigen, wodurch eine Entriegelung des Verschlussdeckels 13 bewirkt wird und der Verschlussdeckel 13 wieder nach aussen geklappt werden kann. Die dabei manuell aufzubringende Lösekraft ist trotz der vergleichsweise hohen Spannkraft sehr gering.

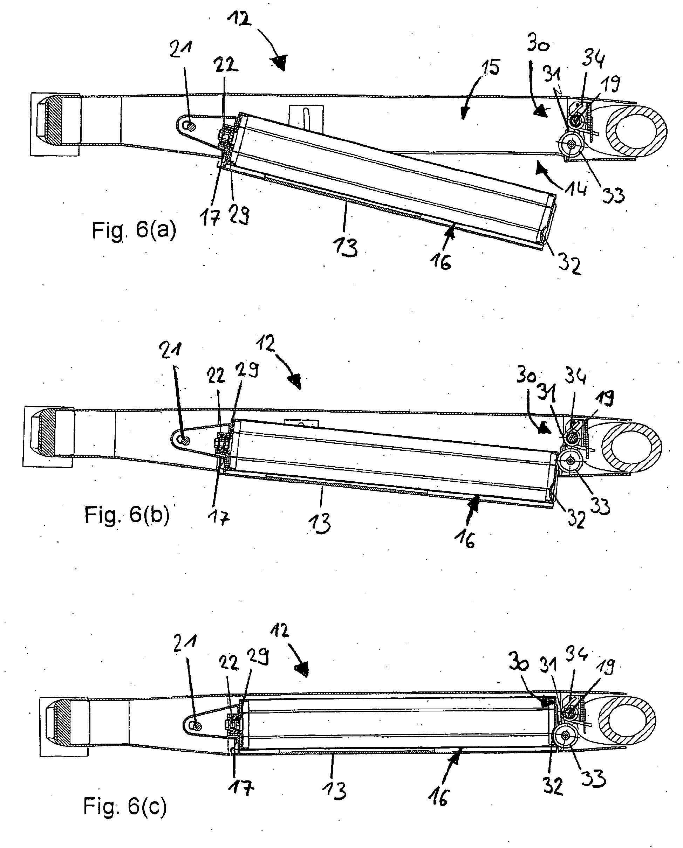

Fig. 6(a) zeigt einen Rohrabschnitt 12 mit einer Spanneinrichtung 30 gemäss einer zweiten Ausführungsform der Erfindung. Die Spanneinrichtung 30 umfasst eine Führungsrolle 33, die über einen Schwenkarm 31 an eine näher an der Rückwandseite angeordnete Spiralfeder 34 gekoppelt ist. Die Spiralfeder 34 ist an ihrer anderen Seite mit dem Rohrabschnitt 12 fest verbunden. Der Schwenkarm 31 ist um eine in der Spiralfeder 34 angeordnete Achse 19 schwenkbar gelagert, so dass eine Bewegungskomponente der Führungsrolle 33 in Erstreckungsrichtung des Rohrabschnitts 12 gewährleistet ist. Ferner ist die Batterieeinheit 16 dargestellt, die bereits in die Steckaufnahme 17 eingesteckt ist. An der Stirnseite der Batterieeinheit 16 ist eine kreisrunde Vertiefung 32 ausgebildet, die förmlich einem Teilumfang der Führungsrolle 33 entspricht, um ein Einrasten zu ermöglichen.

Fig. 6(b) zeigt die Batterieeinheit 16 nach dem Verschwenken des Verschlussdeckels 13, bis die Stirnseite der Batterieeinheit 16 mit der Führungsrolle 33 in Kontakt tritt. Beim Weiterführen der Batterieeinheit 16 wird die Führungsrolle 33 in eine Drehbewegung versetzt und ein Aufziehen der Spiralfeder 34 bewirkt, wodurch eine zunehmende Kraftbeaufschlagung der Führungsrolle 33 in Richtung der Batterieeinheit 16 erzielt wird.

Fig. 6(c) zeigt die Batterieeinheit 16 nach dem vollständigen Einführen in den Innenraum 15 des Rohrabschnitts 12. Dabei ist die Führungsrolle 33 in die Vertiefung 32 eingerastet und der Verschlussdeckel 13 ist verschlossen.

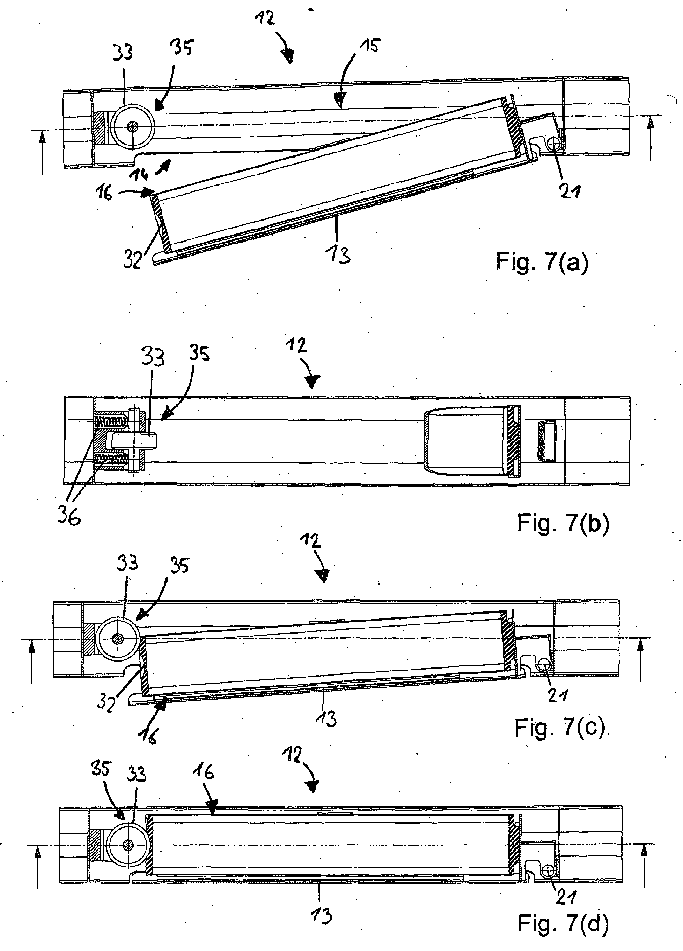

Fig. 7(a) zeigt einen Rohrabschnitt 12 mit einer Spanneinrichtung 35 gemäss einer dritten Ausführungsform der Erfindung. Die Spanneinrichtung 35 umfasst eine Führungsrolle 33. Ferner ist wieder die in die Steckaufnahme 17 eingesteckte Batterieeinheit 16 dargestellt.

Fig. 7(b) zeigt den in Fig. 7(a) dargestellten Rohrabschnitt 12 in einer Schnittansicht gemäss der in Fig. 7(a) angedeuteten Schnittebene. Darin ist erkennbar, dass die Spanneinrichtung 35 mit einem endseitig in dem Innenraum 15 angeordneten Federpaar 36 in Verbindung steht.

Fig. 7(c) zeigt den Rohrabschnitt 12 gemäss der Ansicht von Fig. 7(a), wobei die Batterieeinheit 16 bis zum stirnseitigen Kontakt mit der Führungsrolle 33 herangeführt ist. Durch weiteres Verschwenken des Verschlussdeckels 13 erfolgt auch hier eine zunehmende Kraftbeaufschlagung der Batterieeinheit 16, bis diese mit ihrer kreisrunden Vertiefung in die Führungsrolle 33 eingerastet ist, wie dies in Fig. 7(d) gezeigt ist.

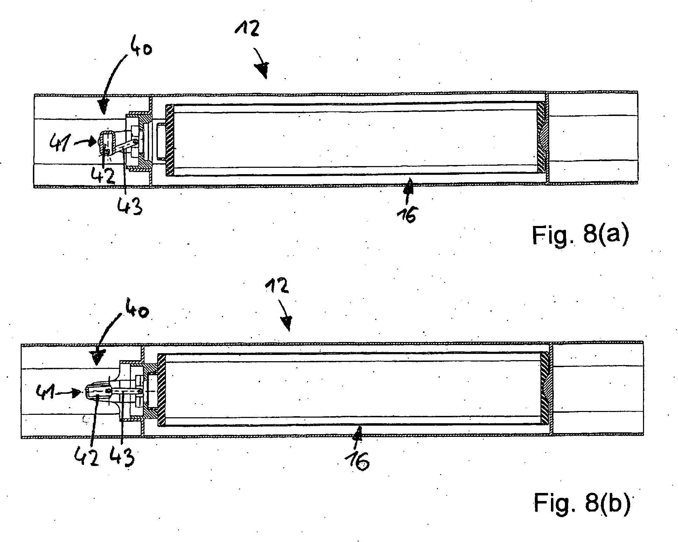

Fig. 8(a) zeigt einen Rohrabschnitt 12 mit einer Spanneinrichtung 40 gemäss einer vierten Ausführungsform der Erfindung. Die Spanneinrichtung 40 umfasst eine drehbar gelagerte Achse 41, die von aussen manuell betätigbar ist. an die Achse 41 ist ein Verdrehbolzen 42 angelenkt an dessen entgegengesetztem Ende wiederum ein Fixierstift 43 angelenkt ist. Ferner ist die Batterieeinheit 16 dargestellt, die bereits in den Innenraum 15 eingebracht ist. Die Spanneinrichtung 40 befindet sich im entspannten Zustand.

Fig. 8(b) zeigt den Rohrabschnitt 12 nach Verdrehen der Achse 41, wodurch der Verdrehbolzen in Richtung der Batterieeinheit bewegt wird und der Fixierstift an die Stirnseite der Batterieeinheit 16 anschlägt, so dass bei weiterem Verdrehen der Achse 41 eine zunehmende Spannkraft an der Batterieeinheit 16 erzeugbar ist.

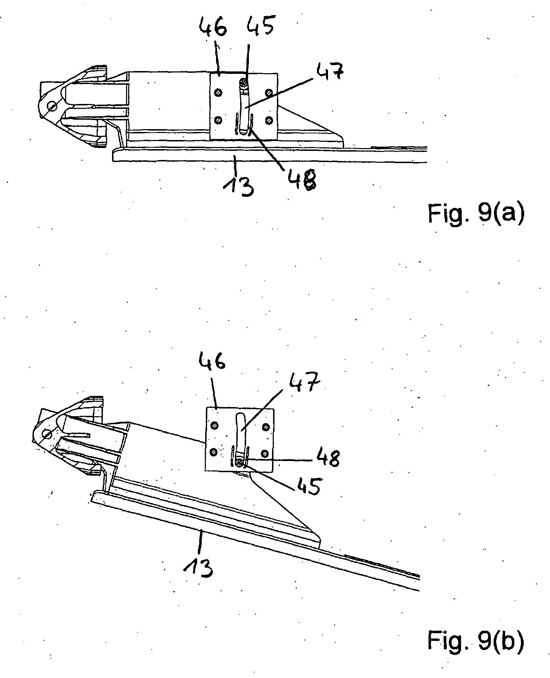

Die Figg. 9(a) und 9(b) zeigen den Verschlussdeckel 13 in einer Draufsicht mit einem daran befestigten Führungsbolzen 45. Der Führungsbolzen greift in die Schiene 47 eine Führungsplatte 46 ein, die an einem Rohrabschnitt 12 festgelegt ist. In der äusseren Endzone der Schiene 47 ist eine Raststruktur 48 ausgebildet, durch welche der Verschlussdeckel 13 in der äusseren Endposition arretiert wird.

Aus der vorangehenden Beschreibung sind dem Fachmann Abwandlungen des erfindungsgemässen Fahrradrahmens zugänglich, ohne den Schutzbereich der Erfindung zu verlassen, der allein durch die Patentansprüche definiert ist. Denkbar ist u.a.:
- der Rohrabschnitt 12 mit dem Innenraum 15 zur Aufnahme mindestens einer Batterieeinheit 16 kann anstelle des Unterrohrs 8 beispielsweise auch durch das Oberrohr 7 oder das Sattelrohr 6 der Fahrradrahmengeometrie gebildet sein und sich entweder über die gesamte Rohrlänge hinweg oder nur über einen Teilbereich des betreffenden Rahmenrohrs erstrecken.
- neben den gezeigten Ausführungsbeispielen mit jeweils einer Spanneinrichtung 20, 30, 35, 40 ist auch denkbar, eine Kombination solcher Spanneinrichtungen zu verwenden, beispielsweise durch die Kombination einer Federspannung mit einer Kraftbeaufschlagung durch eine drehbar gelagerte Achse, um eine gewünschte Spannwirkung zu erreichen.

## Patentansprüche

1. Fahrradrahmen (5), der einen Rohrabschnitt (12) mit einem Innenraum (15) zur Aufnahme mindestens einer Batterieeinheit (16) aufweist, die als Energiequelle für einen elektromotorischen Fahrradantrieb (4) geeignet ist, **dadurch gekennzeichnet, dass** in dem Rohrabschnitt (12) eine im Wesentlichen in seine Erstreckungsrichtung verlaufende Seitenöffnung (14) ausgebildet ist, durch welche die Batterieeinheit in den Innenraum (15) einfügbar ist.

2. Fahrradrahmen nach Anspruch 1, **dadurch gekennzeichnet, dass** an einem Ende des Innenraums (15) eine Schwenkachse (21) angeordnet ist, an welche die Batterieeinheit (16) koppelbar und nach dem Ankoppeln in Richtung des Innenraums (15) schwenkbar ist.

3. Fahrradrahmen nach Anspruch 2, **dadurch gekennzeichnet, dass** im Bereich der Schwenkachse (21) ein elektrischer Kontakt (22) für die Batterieeinheit (16) angeordnet ist.

4. Fahrradrahmen nach Anspruch 2 oder 3, **gekennzeichnet durch** einen Verschlussdeckel (13) für die Seitenöffnung (14), der an die Schwenkachse (21) angelenkt ist.

5. Fahrradrahmen nach einem der Ansprüche 1 bis 4, **dadurch gekennzeichnet, dass** in dem Innenraum (15) eine Spanneinrichtung (20, 30, 35, 40) angeordnet ist, durch welche die Batterieeinheit (16) in Erstreckungsrichtung des Rohrabschnitts (12) mit einer Spannkraft beaufschlagbar ist.

6. Fahrradrahmen nach einem der Ansprüche 2 bis 4 und Anspruch 5, **dadurch gekennzeichnet, dass** die Spanneinrichtung (20, 30, 35, 40) an dem der Schwenkachse (21) gegenüberliegenden Ende des Innenraums (15) angeordnet ist.

7. Fahrradrahmen nach Anspruch 5 oder 6, **dadurch gekennzeichnet, dass** die Spannkraft mindestens 100 N, vorzugsweise 150 N, beträgt.

8. Fahrradrahmen nach einem der Ansprüche 5 bis 7, **gekennzeichnet durch** mindestens eine Feder (24, 34, 36) zur Erzeugung der Spannkraft.

9. Fahrradrahmen nach einem der Ansprüche 5 bis 8, **dadurch gekennzeichnet, dass** die Spanneinrichtung (20) einen Schwenkarm (23) umfasst, der zwischen einer Aussenstellung, in welcher der Schwenkarm (23) in Richtung der Seitenöffnung weist, und einer Innensstellung, in welcher der Schwenkarm (23) näher in Erstreckungsrichtung des Rohrabschnitts (12) gerückt ist, schwenkbar ist, wobei der Schwenkarm (23) während des Einfügens der Batterieeinheit (16) an dieser festlegbar ist.

10. Fahrradrahmen nach Anspruch 8 und 9, **dadurch gekennzeichnet, dass** die Feder (24) in den Schwenkarm (23) integriert ist.

11. Fahrradrahmen nach einem der Ansprüche 5 bis 8, **dadurch gekennzeichnet, dass** die Spanneinrichtung (30, 35) eine Führungsrolle (33) umfasst, entlang welcher die Batterieeinheit (16) während des Einfügens in den Innenraum (15) geführt wird.

12. Fahrradrahmen nach Anspruch 8 und 11, **dadurch gekennzeichnet, dass** die Führungsrolle (33) an die Feder (34, 36) gekoppelt ist.

13. Fahrradrahmen nach einem der Ansprüche 5 bis 12, **dadurch gekennzeichnet, dass** die Spanneinrichtung (40) eine drehbar gelagerte Achse (41) umfasst, durch welche die Batterieeinheit (16) nach dem Einfügen mit der Spannkraft beaufschlagbar ist.

14. Fahrradrahmen (5) nach einem der Ansprüche 1 bis 13 mit einer Batterieeinheit (16) zum Einfügen in diesen.

15. Fahrradrahmen mit einer Batterieeinheit (16) nach Anspruch 14, **dadurch gekennzeichnet, dass** an ihrer Rückseite ein Steckabschnitt (29) zum Ankoppeln an die Schwenkachse (21) angeordnet ist.

16. Fahrradrahmen mit einer Batterieeinheit (16) nach Anspruch 14 oder 15, **dadurch gekennzeichnet, dass** stirnseitig eine Erhebungs- und/oder Vertiefungsstruktur (18) zur Festlegung an der Spanneinrichtung (20), insbesondere an dem Schwenkarm (23) und/oder an der Führungsrolle (33), ausgebildet ist.

## Claims

1. Bicycle frame (5) comprising a tube section (12) having an interior space (15) for receiving at least one battery unit (16) that is suitable as a source of energy for an electromotive bicycle drive (4), **characterised in that** the tube section (12) is provided with a lateral opening (14) substantially extending in the direction of extension of the tube section, through which opening the battery unit is insertable into the interior space (15).

2. Bicycle frame according to claim 1, **characterised in that** at one end of the interior space (15), a hinge (21) is arranged to which the battery unit (16) can be coupled and swung toward the interior space (15) after the coupling.

3. Bicycle frame according to claim 2, **characterised in that** an electric contact (22) for the battery unit (16) is arranged at the region of the hinge (21).

4. Bicycle frame according to claim 2 or 3, **characterised by** a closure lid (13) for the lateral opening (14) that is hinged to the hinge (21).

5. Bicycle frame according to one of claims 1 to 4, **characterised in that** a tensioning device (20, 30, 35, 40) is arranged in the interior space (15) by which a tension force is applicable on the battery unit (16) in the direction of extension of the tube section (12).

6. Bicycle frame according to one of claims 2 to 4 and claim 5, **characterised in that** the tensioning device (20, 30, 35, 40) is arranged at the end of the interior space (15) opposite the hinge (21).

7. Bicycle frame according to claim 5 or 6, **characterised in that** the tension force is equal to at least 100 N, preferably about 150 N.

8. Bicycle frame according to one of claims 5 to 7, **characterised by** at least one spring (24, 34, 36) for producing the tension force.

9. Bicycle frame according to one of claims 5 to 8, **characterised in that** the tensioning device (20) comprises a pivot arm (23) capable of pivoting between an outer position in which the pivot arm (23) is directed toward the lateral opening, and an inner position in which the pivot arm (23) is brought nearer to the direction of extension of the tube section (12), the pivot arm (23) being fixable to the battery unit (16) during the insertion of the latter.

10. Bicycle frame according to claim 8 and 9, wherein the spring (24) is integrated into the pivot arm (23).

11. Bicycle frame according to one of claims 5 to 8, **characterised in that** the tensioning device (30, 35) comprises a guide roller (33) along which the battery unit (16) is guided during its insertion into the interior space (15).

12. Bicycle frame according to claim 8 and 11, wherein the guide roller (33) is coupled to the spring (34, 36).

13. Bicycle frame according to one of claims 5 to 12, **characterised in that** the tensioning device (40) comprises a rotatably mounted axle (41) by which the tension force is applicable on the battery unit (16) after its insertion.

14. Bicycle frame (5) according to one of claims 1 to 13 with a battery unit (16) for insertion in the former.

15. Bicycle frame with a battery unit (16) according to claim 14, **characterised in that** a connecting section (29) for coupling it to the hinge (21) is arranged on its rear side.

16. Bicycle frame with a battery unit (16) according to claim 14 or 15, **characterised in that** a projecting or recessed structure (18) for locking to the tensioning device (20), more particularly to the pivot arm (23) and/or to the guide roller (33), is formed on the front side.

## Revendications

1. Cadre de vélo (5) comprenant une section de tube (12) ayant un espace intérieur (15) destiné à recevoir au moins une unité de batterie (16) apte à servir de source d'énergie pour un entraînement (4) électromoteur du vélo, **caractérisé en ce que** dans la section de tube (12) est formée une ouverture latérale (14) s'étendant en direction d'étendue de celle-là, par laquelle ouverture l'unité de batterie est insérable dans l'espace intérieur (15).

2. Cadre de vélo selon la revendication 1, **caractérisé en ce qu'**à l'une des extrémités de l'espace intérieur (15) est agencé un axe de pivotement (21) auquel l'unité de batterie (16) peut être accouplée et, après l'accouplement, pivotée vers l'espace intérieur (15).

3. Cadre de vélo selon la revendication 2, **caractérisé en ce que** dans la zone de l'axe de pivotement (21) est agencé un contact électrique (22) pour l'unité de batterie (16).

4. Cadre de vélo selon la revendication 2 ou 3, **caractérisé par** un couvercle (13) pour l'ouverture latérale (14) lequel est articulé sur l'axe de pivotement (21).

5. Cadre de vélo selon l'une quelconque des revendications 1 à 4, **caractérisé en ce que** dans l'espace intérieur (15) est agencé un dispositif de serrage (20, 30, 35, 40) lequel permet d'appliquer une force de serrage à l'unité de batterie (16) en direction d'étendue de ladite section de tube (12).

6. Cadre de vélo selon l'une quelconque des revendications 2 à 4 et la revendication 5, **caractérisé en ce que** le dispositif de serrage (20, 30, 35, 40) est agencé à l'extrémité opposée à l'axe de pivotement (21) de l'espace intérieur (15).

7. Cadre de vélo selon la revendication 5 ou 6, **caractérisé en ce que** la force de serrage est égale à au moins 100 N, préférablement à 150 N.

8. Cadre de vélo selon l'une quelconque des revendications 5 à 7, **caractérisé par** au moins un ressort (24, 34, 36) produisant la force de serrage.

9. Cadre de vélo selon l'une quelconque des revendications 5 à 8, **caractérisé en ce que** le dispositif de serrage (20) comprend un bras pivotant (23) pouvant pivoter entre une position extérieure dans laquelle le bras pivotant (23) est orienté vers l'ouverture latérale et une position intérieure dans laquelle le bras pivotant (23) est rapproché de la direction d'étendue de ladite section de tube (12), le bras pivotant (23) pouvant être fixé à l'unité de batterie (16) pendant l'insertion de cette dernière.

10. Cadre de vélo selon la revendication 8 et 9, **caractérisé en ce que** le ressort (24) est intégré dans le bras pivotant (23).

11. Cadre de vélo selon l'une quelconque des revendications 5 à 8, **caractérisé en ce que** le dispositif de serrage (30, 35) comporte un galet de guidage (33) le long duquel l'unité de batterie (16) est guidée pendant son insertion dans l'espace intérieur (15).

12. Cadre de vélo selon la revendication 8 et 11, **caractérisé en ce que** le galet de guidage (33) est accouplé au ressort (34, 36).

13. Cadre de vélo selon l'une quelconque des revendications 5 à 12, **caractérisé en ce que** le dispositif de serrage (40) comprend un axe (41) rotativement logé par lequel la force de serrage peut être appliquée à l'unité de batterie (16) après son insertion.

14. Cadre de vélo (5) selon l'une quelconque des revendications 1 à 13 avec une unité de batterie (16) destinée à y être insérée.

15. Cadre de vélo avec une unité de batterie (16) selon la revendication 14, **caractérisé en ce qu'**à l'arrière de celle-ci est agencé une section d'enfichage (29) pour son accouplement à l'axe de pivotement (21).

16. Cadre de vélo avec une unité de batterie (16) selon la revendication 14 ou 15, **caractérisé en ce que** du côté frontal de celle-ci est formée une structure en relief et/ou en retrait (18) pour sa fixation au dispositif de serrage (20), plus particulièrement au bras pivotant (23) et/ou au galet de guidage (33).
